# EUROPEAN PATENT APPLICATION

(11) **EP 4 834 117 A1**
(43) Date of publication of application: **04.11.2026**
(21) Application number: 24912757.2
(22) Date of filing: 23.12.2024
(51) Int. Cl.: A23B 2/00

(54) **METHOD FOR MANUFACTURING RETORT POUCH FOOD PRODUCT**

(30) Priority: 25.12.2023 JP 2023217751
(71) Applicant: Yushin Co., Ltd., Sanjo-shi, Niigata 955-0002 (JP)
(72) Inventor: FUTASE, Katsunori, Yanagawa-Shinden, Sanjo-shi, Niigata 955-0002 (JP)
(74) Representative: Grünecker Patent- und Rechtsanwälte PartG mbB
(86) International application number: PCT/JP2024/045537
(87) International publication number: WO 2025/142870

(57) **Abstract**

An object is to provide a technology for easily producing retort pouch food products, which are continuously produced with a filling and packaging machine, using a method of applying high-temperature heat sterilization under atmospheric pressure. Specifically, retort pouch food products are continuously produced through a cell body forming step of individually storing, between a pair of metal cells, each of retort pouch foods continuously produced with the filling and packaging machine to form a cell body, a heat sterilization step of immersing the cell body in a heating bath filled with a heating medium having a boiling point of over 100°C to heat a content of the retort pouch food stored in the cell body under atmospheric pressure, and a cooling step of immersing the cell body that has been subjected to heat sterilization in the heat sterilization step in a cooling bath with a temperature of 50°C or lower to cool the content of the retort pouch food.

## Description

### Technical Field

The present invention relates to a method for easily producing a retort pouch food product by producing a retort pouch food by heat-sealing mainly a multilayer film (a laminated plastic film) for packaging to form a pouch, and filling the pouch with a content to be packaged at the same time, using a filling and packaging machine, and then subjecting the retort pouch food to high-temperature heat sterilization under atmospheric pressure.

### Background Art

Retort pouch food products can be stored at room temperature for a long period because the inside of the pouches can be made sterile. Thus, retort pouch food products, such as those produced by packaging ready-cooked foods like curry and stew, are convenient for individual meals, and are also widely used as emergency foods in times of disaster.

Retort pouch food products are generally defined as "food products produced by filling containers (which are limited to those with airtightness and light-blocking properties) prepared by forming a plastic film or metal foil, or a multilayer film thereof into the shape of a pouch or other shapes with prepared foods, and sealing the containers by heat fusion, and then subjecting the containers to heat sterilization under pressure" based on the "Quality Labeling Standards for Retort Pouch Foods (noticed by the Consumer Affairs Agency)."

Therefore, a retort pouch food product is produced by filling a pouch (a container) made of a multilayer packaging film, for example, with a food to be packaged. For example, as described in Patent Literature 1, a retort pouch food product is produced through heat sterilization under pressure in such a manner that a retort pouch food is placed in a retort sterilizer, and is held therein at a high temperature (sterilization performed at 105 to 115°C is referred to as semi-retort sterilization, sterilization performed at 120°C is referred to as retort sterilization, and sterilization performed at 130°C or greater is referred to as high-retort sterilization) for several seconds to 30 minutes while high-temperature steam (or hot water) is injected into the retort sterilizer under pressure so that the retort pouch food will not rupture.

### Citation List

### Patent Literature

Patent Literature 1: Japanese Patent Laid-Open No. 2016-096786

### Summary of Invention

### Technical Problem

A heat sterilization process for a retort pouch food involves the use of an expensive, large facility as it is performed under pressure as described above. Further, a cooling process performed after the heat sterilization process needs to be performed by gradually cooling the retort pouch food while reducing pressure in the retort sterilizer so that the retort pouch food will not rupture. Such a process is time-consuming and costly, which is problematic.

In particular, in recent years, advances in filling and packaging machines and multilayer packaging films have made it possible to continuously produce retort pouch foods at high speeds. However, as the efficiency of the heat sterilization process is low as described above, it is necessary to use a plurality of retort sterilizers, for example, which hinders improvements in productivity through automation.

Accordingly, an object of the present invention is to provide a technology for easily producing retort pouch food products, which are continuously produced with a filling and packaging machine, using a method of applying high-temperature heat sterilization under atmospheric pressure.

### Solution to Problem

A method for producing a retort pouch food product according to the present invention developed to achieve the foregoing object is a method for producing a retort pouch food product by producing a retort pouch food by heat-sealing a belt-like multilayer packaging film to form a pouch and filling the pouch with a content to be packaged at the same time, using a filling and packaging machine, and then subjecting the retort pouch food to heat sterilization, the method including a cell body forming step of individually storing, between a pair of metal cells, each of retort pouch foods continuously produced with the filling and packaging machine to form a cell body, a heat sterilization step of immersing the cell body in a heating bath filled with a heating medium having a boiling point of over 100°C to heat a content of the retort pouch food stored in the cell body under atmospheric pressure, and a cooling step of immersing the cell body that has been subjected to heat sterilization in the heat sterilization step in a cooling bath with a temperature of 50°C or lower to cool the content of the retort pouch food, thereby continuously producing retort pouch food products.

The method for producing a retort pouch food product according to the present invention preferably includes the following features.
(1) At least one of mutually facing surfaces of the pair of cells is provided with a recessed portion, and the retort pouch food is stored in the recessed portion.
(2) An outer peripheral portion of each retort pouch food, including at least a heat-sealed portion, is sandwiched between outer peripheral portions of the pair of cells, and is sealed between the pair of cells.
(3) An outer peripheral portion of each retort pouch food, including at least an inner edge portion of a heat-sealed portion, is held between the pair of cells with a predetermined gap between the pair of cells.
(4) The method further includes a stacking step of stacking a plurality of cell bodies to form a unit between the cell body forming step and the heat sterilization step, wherein the cell bodies are moved on a per-unit basis.
(5) The heating medium is one or more types of oil selected from glycerin, propylene glycol, and 1,3-butylene glycol; a saline solution; or a mixed solution of the oil and water.

### Advantageous Effects of Invention

With a method for producing a retort pouch food product according to the present invention, it is possible to produce retort pouch foods, which are continuously produced with a filling and packaging machine, by applying high-temperature heat sterilization under atmospheric pressure, by sandwiching each retort pouch food between a pair of cells to form a cell body, and continuously heating the cell bodies under atmospheric pressure using a heating medium. Therefore, it is possible to perform heat sterilization more easily than with a method of performing heat sterilization under pressure using a conventional retort sterilizer, and further shorten the sterilization process time (the time taken from heating to cooling). It is also possible to significantly increase the productivity of retort pouch food products, and reduce the size of a device related to the heat sterilization of retort pouch foods.

According to the method for producing a retort pouch food product of the present invention, the content of a retort pouch food boils by being heated to a high temperature, so that the retort pouch food has an increased internal pressure and thus swells. However, since the retort pouch food is constrained between a pair of thin cells, no pressure is applied to heat-sealed portions, and it is thus possible to prevent the retraction of the seal and the rupture of the pouch due to a decrease in the heat-seal strength. In addition, according to the present invention, when the inner edge portions of the heat-sealed portions located at least at the outer peripheral portions of the heat-sealed portions are sandwiched between a pair of cells, there is no possibility that the pressure of the content will directly affect the heat-sealed portions (the inner edge portions thereof). This can effectively suppress the rupture of the heat-sealed portions.

### Brief Description of Drawings

[Figure 1] Figure 1 is a view illustrating an embodiment of a cell body forming step of a method for producing a retort pouch food product according to the present invention.
[Figure 2] Figure 2 is a view illustrating an embodiment of a cell body in which Figure 2(a) is a plan view, Figure 2(b) is a front view, Figure 2(c) is a cross-sectional view at a position along A-A in Figure 2(a), and Figure 2(d) is a plan view illustrating a state in which an upper cell is removed from the cell body in Figure 2(a).
[Figure 3] Figure 3 is a view illustrating another embodiment of a cross-sectional view at a position along A-A in Figure 2(a).
[Figure 4] Figure 4 is a view illustrating a state in which a plurality of cell bodies form a single unit in which Figure 4(a) is a front view and Figure 4(b) is a right side view.
[Figure 5] Figure 5 is a view illustrating a state in which the unit in Figure 4 is suspended to proceed to a heat sterilization step and a cooling step.

### Description of Embodiments

An embodiment of the present invention will be described based on the drawings.

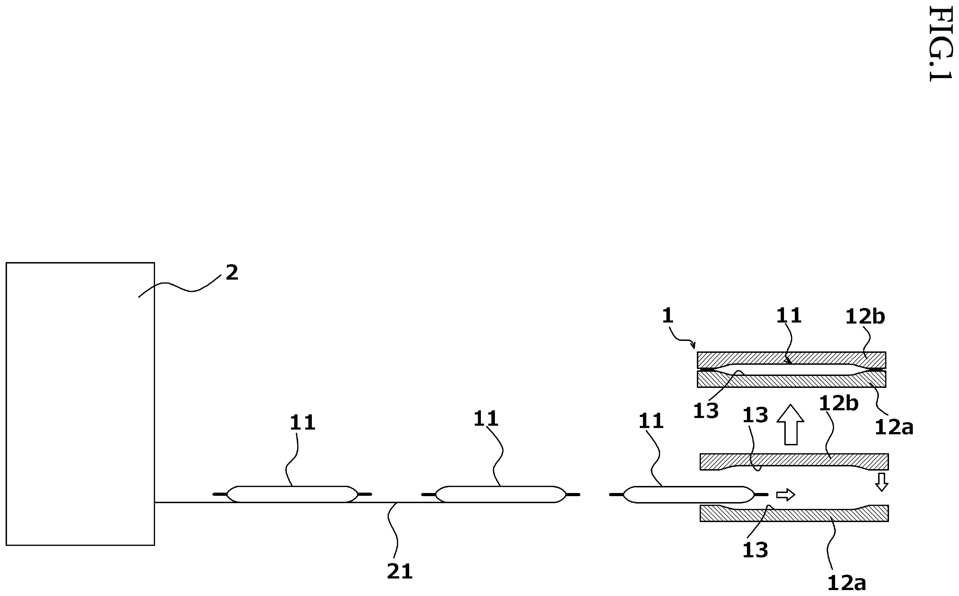

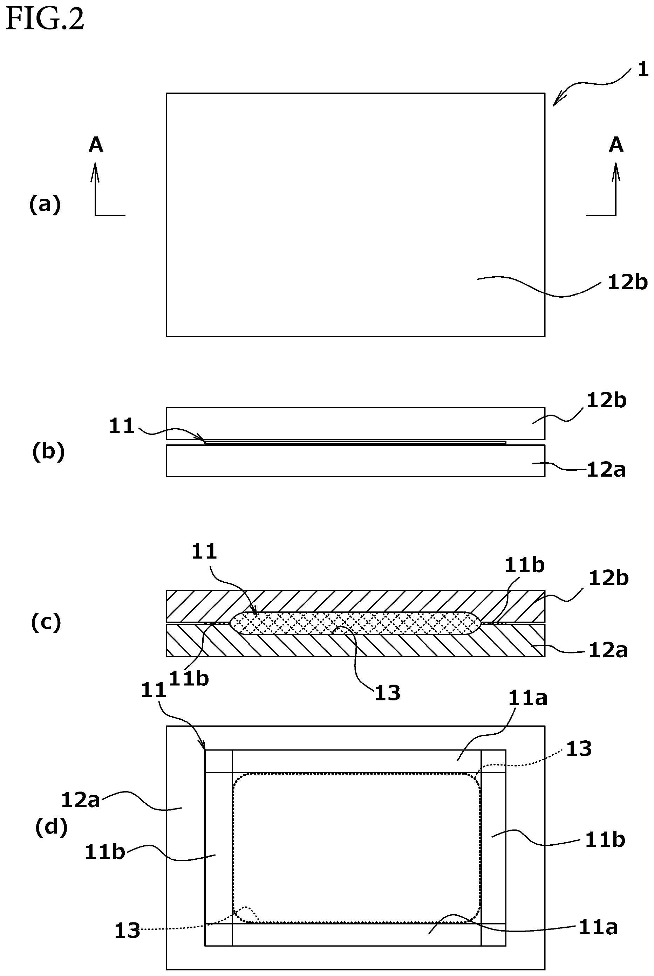

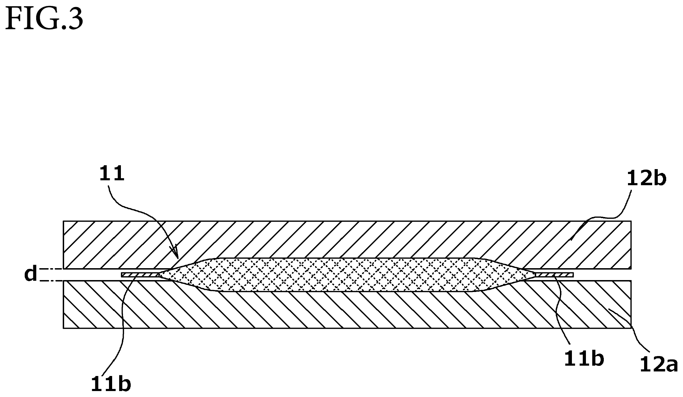

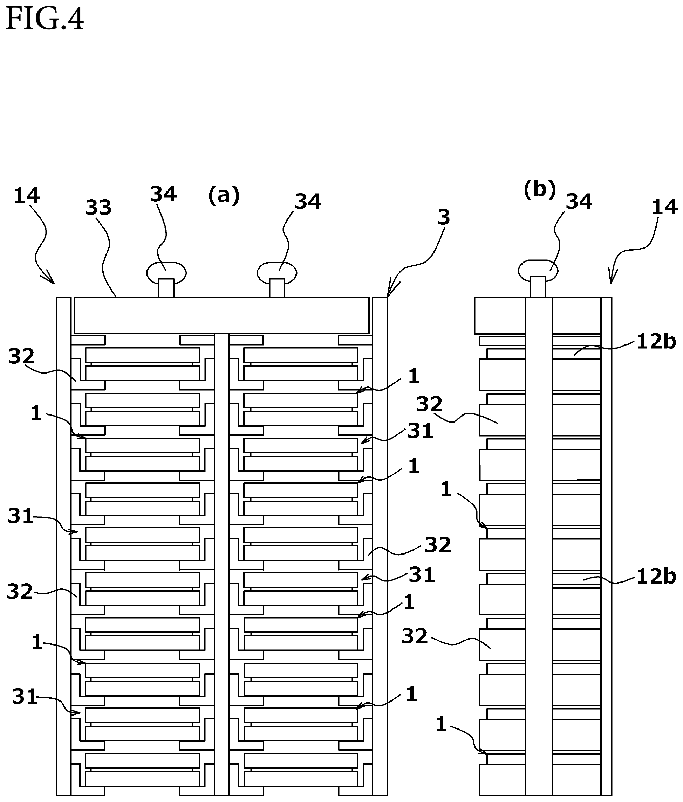

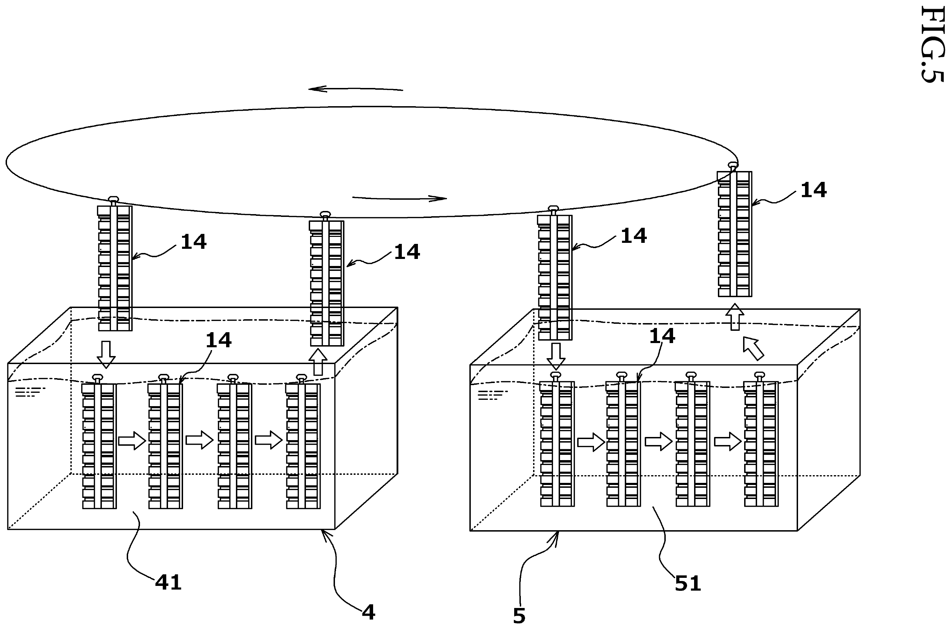

Figure 1 is a view illustrating an embodiment of a cell body forming step of a method for producing a retort pouch food product according to the present invention. Figure 2 is a view illustrating an embodiment of a cell body in which Figure 2(a) is a plan view, Figure 2(b) is a front view, Figure 2(c) is a cross-sectional view at a position along A-A in Figure 2(a), and Figure 2(d) is a plan view illustrating a state in which an upper cell is removed from the cell body in Figure 2(a). Figure 3 is a view illustrating another embodiment of a cross-sectional view at a position along A-A in Figure 2(a). Figure 4 is a view illustrating a state in which a plurality of cell bodies form a single unit in which Figure 4(a) is a front view and Figure 4(b) is a right side view. Figure 5 is a view illustrating a state in which the unit in Figure 4 is suspended to proceed to a heat sterilization step and a cooling step.

The method for producing a retort pouch food product of the present invention mainly includes a cell body forming step, a heat sterilization step, and a cooling step. Each step will be described hereinafter. Note that in this specification, a "pouch" refers to a bag formed with a filling and packaging machine, a "retort pouch food" refers to a packaged food produced by filling the pouch with a content, and a "retort pouch food product" refers to a product produced by subjecting the retort pouch food to a heat sterilization process and a cooling process.

### (Cell body forming step)

A cell body 1 includes a retort pouch food 11 and a pair of cells 12a and 12b (i.e., a lower cell 12a and an upper cell 12b) that are preferably in the shapes of thin plates. As illustrated in Figure 1, the cell body 1 is formed in such a manner that the retort pouch foods 11 continuously produced with a filling and packaging machine 2 are sequentially conveyed on a conveyor 21, and then, each retort pouch food 11 is placed on the lower cell 12a, and the upper cell 12b is placed from above the retort pouch food 11, and further, the upper cell 12b is pressed from above. Note that the shape, the thickness, and the like of each of the cells 12a and 12b can be changed as appropriate.

The retort pouch foods 11 are formed with the filling and packaging machine 2, such as a known vertical filling and packaging machine or a horizontal filling and packaging machine. For example, the filling and packaging machine 2 folds a belt-like multilayer film, which has been continuously unwound from a web roll, at the central position in the width direction, and then continuously vertically seals the folded portion and the overlapping side edge portions of the multilayer film in the conveyance direction to form a cylindrical shape. Then, while filling the inside of the cylindrical multilayer film with a content, the filling and packaging machine 2 horizontally seals the film in a direction perpendicular to the conveyance direction. Thus, the filling and packaging machine 2 can continuously produce the retort pouch foods 11 each having heat-sealed portions (vertically sealed portions 11a and horizontally sealed portions 11b) at the four outer peripheral portions. As the multilayer film, it is preferable to use a plastic film of PET/aluminum foil/nylon/polypropylene, for example, that has a gas barrier property and a light-blocking property and can withstand a high temperature of over 100°C.

The pair of cells 12a and 12b are each obtained by forming mainly metal such as aluminum or titanium. In particular, aluminum is one of the preferable materials as it is lightweight and has excellent thermal conductivity.

As illustrated in Figures 2(c) and 2(d), at least one of the pair of cells 12a and 12b has a recessed portion 13 provided in the central portion of a plane on the mutually opposite sides. The recessed portion 13 is adapted to store therein the retort pouch food 11 (a portion of the content to be stored) provided between the pair of cells 12a and 12b, and is formed as appropriate in keeping with the size of the retort pouch food 11. In this embodiment, the pair of cells 12a and 12b (the lower cell 12a and the upper cell 12b) are each provided with the recessed portions 13 having the same shape (depth). However, such a configuration can be changed as appropriate by, for example, providing only the lower cell 12a with the recessed portion 13 and storing the retort pouch food 11 in the recessed portion 13.

A portion including at least the inner edge portion of each of the heat-sealed portions (the vertically sealed portions 11a and the horizontally sealed portions 11b) provided at the outer peripheral portions of the retort pouch food 11 is sandwiched between the pair of cells 12a and 12b as illustrated in Figure 2(c). Accordingly, the retort pouch food 11 is sealed between the pair of cells 12a and 12b. Note that when the retort pouch food 11 is sealed between the pair of cells 12a and 12b (without a gap therebetween), it is possible to allow heat to be transferred uniformly from a heating medium to the central portion and to the end portions of the retort pouch food 11 in the heat sterilization step, and thus shorten the heating time.

Note that the portion including at least the inner edge portion of each of the heat-sealed portions (the vertically sealed portions 11a and the horizontally sealed portions 11b) provided at the outer peripheral portions of the retort pouch food 11 may be sandwiched between the pair of cells 12a and 12b with a predetermined gap d therebetween as illustrated in Figure 3. In such a case, the gap d is preferably set to 5.0 mm or less. Setting the gap d to 5.0 mm or less can reduce the thickness of the inner edge portion of each heat-sealed portion, and allow internal pressure of the content to be less likely to be applied to the inner edge portion, and thus effectively prevent the rupture of the retort pouch food 11.

Each cell body 1 may be formed as an integral body by fixing the lower cell 12a and the upper cell 12b together with screws, for example, and may be conveyed one by one to proceed to the heat sterilization step and the cooling step described below. However, it is preferable to stack a plurality of cell bodies 1 to form a cell unit 14, and convey each cell unit 14, which can increase productivity.

The cell unit 14 has a pair of L-shaped (inverted L-shaped) support portions 32 in each storage space 31 of a cell unit device 3 such as the one illustrated in Figure 4, for example, and the cell bodies 1 are placed one by one on the support portions 32, and are stored and held thereon (a stacking step). In Figure 4, the cell unit 14 includes ten cell bodies 1, but the number of the stacked cell bodies is not limited to a particular number. Note that each storage space 31 of the cell unit device 3 preferably has a gap at the top when the cell body 1 is stored therein. Providing a gap in such a manner can absorb the thermal expansion volume of the retort pouch food 11 when the cell unit 14 is immersed in a heating bath 4 for heating while being suspended as described below. In addition, each cell body 1 swells due to the thermal expansion of the retort pouch food 11, and thus is firmly constrained within the storage space 31.

The cell unit device 3 has protruding portions 34 on its upper wall surface 33, and can be suspended and held as the protruding portions 34 are hung on hooks. As the hooks are moved using a chain belt and a motor as illustrated in Figure 5, for example, the cell bodies 1 can be conveyed on a per-cell-unit-14 basis. Note that the cell unit 14 and the cell unit device 3 may have any structures as long as a plurality of cell bodies 1 can be stacked and conveyed as a single unit, and are not limited to those illustrated in the drawings.

### (Heat sterilization step)

The heat sterilization step involves the use of the heating bath 4. As described above, the cell unit 14 is suspended with the protruding portions 34, which are provided on the cell unit device 3, hung on the hooks, and is then moved to the heating bath 4 to be immersed in a heating medium 41 filling the heating bath 4. Each cell unit 14 is heated by the heating medium 41 while it is sequentially moved while being immersed in the heating bath 4.

Although only one heating bath 4 is provided in Figure 5, a plurality of heating baths with different temperatures may be provided in series. For example, the heating baths preferably include, as appropriate, a first heating bath 4 provided as a region at 130°C to increase the temperature of the retort pouch food 11 from room temperature, and a second heating bath 4 provided as a region at 125°C to maintain the temperature of the retort pouch food 11 with the increased temperature, to enable efficient heat sterilization.

The heating medium 41 is preferably saline solution or oil with a high boiling point of over 100°C, such as glycerin, propylene glycol, 1,3-butylene glycol, or the like. Alternatively, a mixture of the oil and water may be used, and in such a case, the mixed amount of water is set to 20 mass% or less, preferably 15 mass% or less. Using such a heating medium 41 ensures high safety and allows for easy removal during the cooling step described below. The heating temperature and the heating time for the heating bath 4 are determined in accordance with the specifications and the contents of the retort pouch food products. If retort sterilization is performed, heating is performed such that the core temperature of the content is maintained at 120°C for 4 minutes or longer.

When each retort pouch food 11 in the cell unit 14 is heated to a high temperature and sterilized at the same time by the heating medium 41, the content of the retort pouch food 11 boils, and the retort pouch food 11 has an increased internal pressure and thus swells. However, since the retort pouch food 11 is constrained from above and below between the pair of cells 12a and 12b, no pressure is applied to the heat-sealed portions. Thus, the rupture of the pouch can be effectively prevented. In particular, as the inner peripheral portions of the heat-sealed portions are sandwiched between the pair of cells 12a and 12b, there is no possibility that the pressure of the content will directly affect the heat-sealed portions (the inner edge portions thereof). Thus, the rupture of the heat-sealed portions can be effectively prevented. Note that all of such operations are performed under atmospheric pressure.

As the retort pouch food 11 is constrained between the pair of cells 12a and 12b, the retort pouch food 11 adheres strongly to the wall surfaces (surfaces in contact with the retort pouch food 11) of the cells 12a and 12b and becomes three-dimensional when heated to a high temperature. Therefore, if a company name, a product name, and the like are engraved on the wall surface(s) of the cell(s) 12a and/or 12b, there is an advantage that the engraving is transferred to the retort pouch food 11 and thus becomes a design.

After the heat sterilization process, the cell unit device 3 is lifted and conveyed to proceed to a cooling step, but before that, it is preferable to remove the heating medium 41 adhering to the cell unit device 3 (the cell unit 14) by blowing air thereto, for example.

### (Cooling step)

The cooling step is performed by immersing the cell unit 14, which has been subjected to heat sterilization, in a cooling medium 51, such as water, that fills a cooling bath 5. Each cell unit 14 is cooled by the cooling medium 51 while it is sequentially moved, being immersed in the cooling bath 5. The temperature of the cooling medium 51 in the cooling bath 5 is set to 50°C or lower, preferably 40°C or lower. Although only one cooling bath 5 is provided in Figure 5, a plurality of cooling baths 5 with different temperatures may be provided in series. For example, the cooling baths preferably include, as appropriate, a first cooling bath 5 provided as a region at 50°C, and a second cooling bath 5 provided as a region at 20°C. The cooling medium 51 filling the cooling bath 5 may be water or any other medium, provided it can be maintained at 50°C or lower.

After the cooling, the cell unit device 3 is lifted to remove the cell unit 14 from the cooling bath 5. At this time, it is preferable to remove the cooling medium 51 adhering to the cell unit device 3 and the cell unit 14 by blowing air thereto, for example. Then, removing each cell body 1 in the cooled cell unit 14 from the storage space 31 and further removing the pair of cells 12a and 12b from the cell body 1 can collect the retort pouch food product that has been subjected to the heat sterilization process.

### Industrial Applicability

The method for producing a retort pouch food product according to the present invention that includes applying heat sterilization under atmospheric pressure can be suitably used not only for the production of retort pouch food products, such as those produced by packaging ready-cooked foods like curry and stew, but also for the production of food products that involves a heat sterilization (boiling sterilization) process at a temperature of 100°C or lower, and for the production of various products for which performing heat sterilization is effective, other than foods.

### Reference Signs List

- 1: cell body
- 11: retort pouch food
- 11a: vertically sealed portion
- 11b: horizontally sealed portion
- 12a: cell (lower cell)
- 12b: cell (upper cell)
- 13: recessed portion
- 14: cell unit
- 2: filling and packaging machine
- 21: conveyor
- 3: cell unit device
- 31: storage space
- 32: support portion
- 33: upper wall surface
- 34: protruding portion
- 4: heating bath
- 41: heating medium
- 5: cooling bath
- 51: cooling medium

## Claims

1. A method for producing a retort pouch food product by producing a retort pouch food by heat-sealing a belt-like multilayer packaging film to form a pouch and filling the pouch with a content to be packaged at the same time, using a filling and packaging machine, and then subjecting the retort pouch food to heat sterilization, the method comprising:
a cell body forming step of individually storing, between a pair of metal cells, each of retort pouch foods continuously produced with the filling and packaging machine to form a cell body;
a heat sterilization step of immersing the cell body in a heating bath filled with a heating medium having a boiling point of over 100°C to heat a content of the retort pouch food stored in the cell body under atmospheric pressure; and
a cooling step of immersing the cell body that has been subjected to heat sterilization in the heat sterilization step in a cooling bath with a temperature of 50°C or lower to cool the content of the retort pouch food, thereby continuously producing retort pouch food products.

2. The method for producing a retort pouch food product according to claim 1, wherein at least one of mutually facing surfaces of the pair of cells is provided with a recessed portion, and the retort pouch food is stored in the recessed portion.

3. The method for producing a retort pouch food product according to claim 1 or 2, wherein an outer peripheral portion of each retort pouch food, including at least a heat-sealed portion, is sandwiched between outer peripheral portions of the pair of cells, and is sealed between the pair of cells.

4. The method for producing a retort pouch food product according to claim 1 or 2, wherein an outer peripheral portion of each retort pouch food, including at least an inner edge portion of a heat-sealed portion, is held between the pair of cells with a predetermined gap between the pair of cells.

5. The method for producing a retort pouch food product according to claim 1 or 2, further comprising a stacking step of stacking a plurality of cell bodies to form a unit between the cell body forming step and the heat sterilization step, wherein the cell bodies are moved on a per-unit basis.

6. The method for producing a retort pouch food product according to claim 1 or 2, wherein the heating medium is one or more types of oil selected from glycerin, propylene glycol, and 1,3-butylene glycol; a saline solution; or a mixed solution of the oil and water.
